Europäisches Patentamt

European Patent Office

Office européen des brevets

(19)

(11) Veröffentlichungsnummer: **0 104 525 B1**

# (12) EUROPÄISCHE PATENTSCHRIFT

(45) Veröffentlichungstag der Patentschrift:
01.06.88

(51) Int. Cl.⁴: **C 02 F 3/10, C 02 F 3/06**

(21) Anmeldenummer: **83108950.3**

(22) Anmeldetag: **10.09.83**

(54) **Biologische Abwasserreinigungsanlage und Verfahren zur biologischen Reinigung von Abwasser.**

(30) Priorität: **25.09.82 DE 3235600**

(43) Veröffentlichungstag der Anmeldung:
**04.04.84 Patentblatt 84/14**

(45) Bekanntmachung des Hinweises auf die Patenterteilung:
**01.06.88 Patentblatt 88/22**

(84) Benannte Vertragsstaaten:
**AT BE CH DE FR IT LI NL SE**

(56) Entgegenhaltungen:
**DE - A - 1 459 485**
**DE - A - 1 943 848**
**DE - A - 2 847 114**
**FR - A - 2 427 306**
**GB - A - 1 412 590**
**GB - A - 1 546 423**
**US - A - 4 165 281**

(73) Patentinhaber: **Linde Aktiengesellschaft,
Abraham-Lincoln-Strasse 21, D-6200 Wiesbaden (DE)**

(72) Erfinder: **Reimann, Hans, Dr. rer. nat.,
Rudolf-Wilke-Weg 21, D-8000 München 71 (DE)**
Erfinder: **Fuchs, Uwe, Heiterwangerstrasse 46,
D-8000 München 70 (DE)**

(74) Vertreter: **Schaefer, Gerhard, Dr., Linde
Aktiengesellschaft Zentrale Patentabteilung,
D-8023 Höllriegelskreuth (DE)**

**Beschreibung**

Die Erfindung betrifft eine biologische Abwasserreinigungsanlage mit einem Tropfkörper, der einen Zulauf für zu reinigendes Abwasser, einen Ablauf für gereinigtes Abwasser und eine zumindest teilweise aus offenporigem Schaumstoff bestehende Füllung in Form eines einzigen Schaumstoffblockes oder mehreren Schaumstoffblöcken aufweist, sowie ein Verfahren zur biologischen Reinigung von Abwasser.

In der EP-A-46 901 ist die anaerobe Reinigung von Abwasser in einem Reaktor beschrieben, der mit einem Festbett aus offenporigem Schaumstoff ausgestattet ist. Es können sowohl eine Schüttung aus Schaumstoffteilchen, als auch ein einziger grosser Block verwendet werden. Das entstehenden und unter Druck stehende Faulgas kann über die Poren im Schaumstoff austreten.

Die DE-A-2 002 926 beschreibt einen Tropfkörper, worin als Trägermaterial für die Biomasse ein offenporiger Kunststoffschaum anwesend ist. Zur Versorgung der Biomasse mit Sauerstoff ist eine Zwangsbelüftung notwendig.

Die GB-A-1 546 423 offenbart ein Füllmaterial für Tropfkörper, bestehend aus Schaumstoffblökken, welche eine Vielzahl von parallelen Bohrungen aufweisen.

Aufgabe der vorliegenden Erfindung ist es, eine biologische Abwasserreinigungsanlage der eingangs genannten Art so auszugestalten, dass auf einfache und kostengünstige Weise eine hohe Reinigungsleistung erzielt wird, ohne dass eine Zwangsbelüftung notwendig ist.

Diese Aufgabe wird erfindungsgemäss dadurch gelöst, dass der Schaumstoff eine spezifische Oberfläche von 3000 bis 15 000 m²/m³, vorzugsweise 5000 bis 10 000 m²/m³, aufweist, und innerhalb der Füllung Bohrungen mit einem Durchmesser von 1 bis 5 cm, vorzugsweise 2 bis 2,5 cm, als Belüftungskanäle vorgesehen sind.

Durch die erfindungsgemässe Verwendung von offenporigen Schaumstoffen mit grosser spezifischer Oberfläche von 3000 bis 15 000 m²/m³, vorzugsweise 5000 bis 10 000 m²/m³, wie z.B. Polyurethan, Polyvinylchlorid, Polyethylen, Polypropylen, Formaldehyd-Harnstoffharz, und die gleichzeitige Anordnung von Belüftungskanälen mit einem Durchmesser von 1 bis 5 cm, vorzugsweise 2 bis 2,5 cm, innerhalb der zumindest teilweise aus dem Schaumstoff bestehenden Füllung tritt ein überraschender synergistischer Effekt auf. Einerseits ermöglicht der erfindungsgemäss verwendete Schaumstoff das Anwachsen von im Vergleich zu herkömmlichen Tropfkörpern wesentlich grösseren Mengen an Bakterienrasen und andererseits wird dieser Bakterienrasen durch die durch die Belüftungskanäle gewährleistete Versorgung mit Luft in solchem Masse aktiviert, dass im Vergleich zu den konventionellen Tropfkörpern eine überraschend verbesserte und damit synergistische Reinigungswirkung des Abwassers erzielt wird. Eine Zwangsbelüftung, z.B. mit einem Gebläse, ist beim erfindungsgemässen Tropfkörper nicht notwendig.

Ein weiterer Vorteil der erfindungsgemässen Anlage besteht darin, dass aufgrund der grossen spezifischen Oberfläche eine geringere Bauhöhe bzw. ein kleineres Bauvolumen erzielt wird. Infolge der längeren Kontaktzeiten durch die grosse spezifische Oberfläche verkleinert sich ausserdem das Rücklaufverhältnis bzw. kann in manchen Fällen ganz entfallen.

Die Bohrungen können entweder vertikal in Fliessrichtung des zu reinigenden Abwassers ausgebildet sein oder horizontal, d.h. senkrecht zur Fliessrichtung des Abwassers. Dabei ist es vorteilhaft, wenn die Wandporen der Aussenwand verschlossen werden, soweit dies nicht bereits beim Schäumen erfolgt ist.

Die Erfindung bezieht sich weiterhin auf ein Verfahren zur biologischen Reinigung von Abwasser in einer biologischen Abwasserreinigungsanlage mit einem Tropfkörper der vor beschriebenen Art. Dieses Verfahren ist dadurch gekennzeichnet, dass das zu reinigende Abwasser durch die im Tropfkörper angeordnete Füllung geleitet wird, während gleichzeitig die auf der Füllung angesiedelten die Reinigung des Abwassers bewirkenden Mikroorganismen über die Belüftungskanäle, aber ohne Zwangsbelüftung, mit Luft versorgt werden.

Die erfindungsgemässe biologische Abwasserreinigungsanlage sowie das Verfahren zur biologischen Reinigung von Abwasser finden ihre leistungsfähige Anwendung bei allen Arten der aeroben Abwasserbehandlung, wobei der Tropfkörper für die Vorreinigung oder für die Hauptreinigung des Abwassers in einer oder mehreren Stufen eingesetzt werden kann, und zwar sowohl zum BSB-Abbau als auch zur Nitrifikation. Überdies besteht jedoch auch die Möglichkeit, den erfindungsgemäss ausgebildeten Tropfkörper als anaeroben Filter zu verwenden, wobei das entstehende Faulgas in die (Belüftungs-)Kanäle austreten kann. Diese Anwendung bietet den Vorteil, dass ein Aufreissen eines Kompaktkörpers unter dem Gasdruck vermieden werden kann.

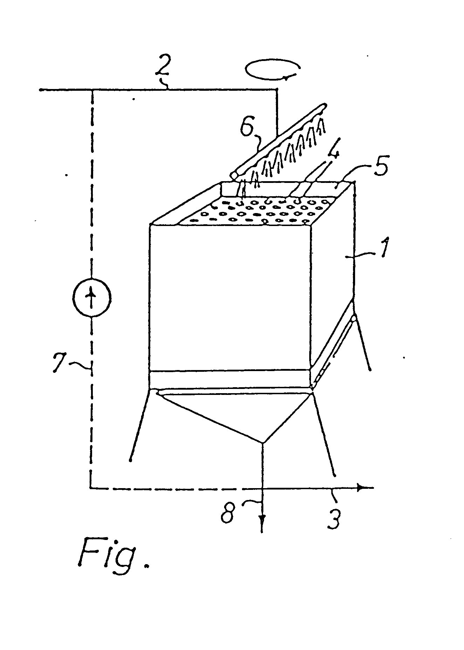

Im folgenden sei die erfindungsgemässe Anlage und insbesondere der erfindungsgemäss ausgestaltete Tropfkörper anhand eines in der Figur schematisch dargestellten Ausführungsbeispiels näher beschrieben.

Die Figur zeigt einen freistehenden Tropfkörper.

Der in der Figur dargestellte Tropfkörper 1 weist einen Zulauf 2 für zu reinigendes Abwasser und einen Ablauf für gereinigtes Wasser auf. Das zu reinigende Abwasser kann dabei entweder vorgeklärt werden oder bereits eine Vorklärung durchströmt haben und nunmehr zum BSB-Abbau oder zur Nitrifikation dem Tropfkörper zugeleitet werden, der in einer beliebigen Stufe der Hauptreinigung des Abwassers angeordnet sein kann.

Erfindungsgemäss ist der Tropfkörper als Schaumstoffblock ausgebildet, und zwar im vorliegenden Ausführungsbeispiel freistehend. Die Belüftungskanäle sind als Bohrungen 4 ausgebildet und haben einen Durchmesser von vorzugsweise 2 bis 2,5 cm. Der Tropfkörper selbst ist aus Hartschaum mit grosser spezifischer Oberfläche von vorzugsweise 5000 bis 10 000 m²/m³ ausgebildet. Als Spritzschutz ist der Tropfkörper 1 mit einem Schutzblech 5 versehen.

Das zu reinigende Abwasser wird über eine drehbare Verteilereinrichtung 6 auf den Tropfkörper 1 aufgegeben, durchfliesst diesen und wird dabei durch die in den Poren des Schaumstoffes angewachsenen und über die Belüftungskanäle mit Luft aktivierten Mikroorganismen gereinigt. Eine Zwangsbelüftung, z. B. mit einem Gebläse, ist dabei nicht notwendig. Das gereinigte Wasser wird über den Ablauf 3 abgezogen und gegebenenfalls einer Nachklärung zugeführt. Ein Teil des gereinigten Abwassers kann über einen Rücklauf 7 dem Zulauf 2 zugeführt werden. Überschussschlamm wird über Leitung 8 abgezogen.

Der Tropfkörper kann mit und ohne Ummantelung ausgebildet sein. Insbesondere in letzterem Fall ist ein Verschliessen der Wandporen von Vorteil, wenn dies nicht bereits beim Einschäumen erfolgt ist.

### Patentansprüche

1. Biologische Abwasserreinigungsanlage mit einem Tropfkörper, der einen Zufluss für zu reinigendes Abwasser, einen Ablauf für gereinigtes Abwasser und eine zumindest teilweise aus offenporigem Schaumstoff bestehende Füllung in Form eines einzigen Schaumstoffblockes oder mehreren Schaumstoffblöcken aufweist, dadurch gekennzeichnet, dass der Schaumstoff eine spezifische Oberfläche von 3000 bis 15 000 m²/m³, vorzugsweise 5000 bis 10 000 m²/m³, aufweist und innerhalb der Füllung Bohrungen (4) mit einem Durchmesser von 1 bis 5 cm, vorzugsweise 2 bis 2,5 cm, als Belüftungskanäle vorgesehen sind.

2. Verfahren zur biologischen Reinigung von Abwasser in einer biologischen Abwasserreinigungsanlage mit einem Tropfkörper nach Anspruch 1, dadurch gekennzeichnet, dass das zu reinigende Abwasser durch die im Tropfkörper angeordnete Füllung geleitet wird, während gleichzeitig die auf der Füllung angesiedelten, die Reinigung des Abwassers bewirkenden, Mikroorganismen über die Belüftungskanäle, aber ohne Zwangsbelüftung, mit Luft versorgt werden.

### Claims

1. A biological sewage purification plant comprising a percolating filter which is provided with an inflow for the sewage to be purified, an outflow for purified sewage, and a filling consisting at least in part of open-pored foam in the form of a single foam block or a plurality of foam blocks, characterised in that the foam has a specific surface area of 3000 to 15 000 m²/m³, preferably 5000 to 10 000 m²/m³, and that bores (4) having a diameter of 1 to 5 cm, preferably 2 to 2.5 cm, are provided in the filling as ventilating channels.

2. A process for the biological purification of sewage in a biological sewage purification plant comprising a percolating filter as claimed in Claim 1, characterised in that the sewage to be purified is led through the filling arranged in the percolating filter, whilst simultaneously the micro-organisms which colonise on the filling and which effect the purification of the sewage are supplied with air through the ventilating channels but without forced ventilation.

### Revendications

1. Dispositif de purification biologique des eaux résiduaires, comportant un corps de ruissellement qui comprend une conduite d'amenée d'eaux résiduaires à purifier, une conduite d'évacuation des eaux résiduaires purifiées et un garnissage formé au moins en partie d'une matière alvéolaire à pores ouverts et constitué par un seul bloc ou par plusieurs blocs de matière alvéolaire, caractérisé en ce que la matière alvéolaire présente une surface spécifique de 3000 à 15 000 m²/m³, de préférence de 5000 à 10 000 m²/m³ et en ce que ledit garnissage est pourvu de perçages (4) d'un diamètre de 1 à 5 cm, de préférence de 2 à 2,5 cm, qui font fonction de passages d'aération.

2. Procédé de purification biologique des eaux résiduaires dans un dispositif de purification biologique des eaux résiduaires comportant un corps de ruissellement selon la revendication 1, caractérisé en ce qu'on fait passer les eaux résiduaires à purifier à travers le garnissage disposé dans ledit corps de ruissellement, cependant qu'en même temps, on alimente en air les micro-organismes développés sur ledit garnissage et assurant la purification des eaux résiduaires, à travers lesdits passages d'aération, sans ventilation forcée.

Fig.